# EUROPÄISCHE PATENTSCHRIFT

(11) **EP 0 405 245 B1**
(45) Veröffentlichungstag und Bekanntmachung des Hinweises auf die Patenterteilung: **26.11.1997**
(21) Anmeldenummer: 90111283.9
(22) Anmeldetag: 15.06.1990
(51) Int. Cl.: F16L 33/20

(54) **Schlauchanschlussarmatur für einen Hochdruckschlauch**
Flexible hose connection for a high pressure hose
Raccord de tuyau flexible pour un tuyau flexible à haute pression

(30) Priorität: 24.06.1989 DE 3920810
(43) Veröffentlichungstag der Anmeldung: 02.01.1991
(73) Patentinhaber: Techno-Chemie Kessler & Co. GmbH, 61184 Karben (DE)
(72) Erfinder: Rubitschu, Lothar, D-6370 Oberursel (DE); Vogel, Gerd, Ing.-grad., D-6120 Michelstadt (DE); Thieme, Christian, Dipl.-Kfm., D-3002 Wedemark 2 (DE)
(74) Vertreter: Schieferdecker, Lutz, Dipl.-Ing.

(56) Entgegenhaltungen:
- EP-A- 0 160 758
- AU-B- 510 400
- DE-B- 1 600 616
- DE-B- 2 331 977
- GB-A- 2 088 001
- US-A- 3 347 571

## Beschreibung

Die Erfindung bezieht sich auf eine Schlauchanschlußarmatur für einen Hochdruckschlauch mit einem in das Schlauchende einsetzbaren Nippel und mit einer zu seiner Befestigung auf das Schlauchende aufpreßbaren Klemmhülse, wobei radial einwärts gerichtete Halterippen innen an der Klemmhülse und/oder Dichtungsnuten außen am Nippel vorgesehen sind.

Eine derartige Schlauchanschlußarmatur ist aus der EP-A-0 260 547 bekannt. Hochdruckschläuche werden z.B. in Kraftfahrzeugen im Zusammenhang mit der Servolenkung eingesetzt. Zumeist weisen sie ein zur Verstärkung dienendes Garngeflecht auf und sind in der Lage, vom Fahrgestell auf die Lenkung des Kraftfahrzeugs übertragene Stöße und damit verbundene hohe Druckimpulse im Schlauchsystem durch Volumenzunahme abzubauen. Dies setzt voraus, daß der Schlauch sicher absolut druckdicht auf dem Nippel befestigt ist, wozu die aufpreßbare Klemmhülse dient.

Bei der bekannten Schlauchanschlußarmatur sind axial hintereinander vom Schlauchende zum Nippelende hin eine Dichtzone mit Dichtungsnuten außen am Nippel, eine Haltezone mit Halterippen innen an der Klemmhülse und eine Übergangszone vorgesehen, innerhalb der der Nippel eine bis zu seinem inneren Ende reichende glatte Außenumfangsfläche und die Klemmhülse eine sich kegelförmig bis zum inneren Hülsenende erweiternde Innenumfangsfläche aufweist, die gleichfalls frei von Rippen oder Nuten ist. Dieser Übergangsabschnitt mit am Schlauch angreifenden glatten Umfangsflächen vermag nicht zu verhindern, daß beim Verpressen der Klemmhülse und der damit einhergehenden radialen Einschnürung des Schlauchendes Schlauchmaterial bis zu mehreren Millimetern axial aus der Klemmhülse herausgedrückt wird.

Der Erfindung liegt die Aufgabe zugrunde, eine Schlauchanschlußarmatur mit einem Nippel und einer Klemmhülse zu schaffen, die auch bei höchster Kompression des Schlauchendes während des Verpressens der Klemmhülse einer axialen Verschiebung des Hochdruckschlauchs relativ zum Nippel bzw. zur Klemmhülse vorbeugt.

Diese Aufgabe wird erfindungsgemäß dadurch gelöst, daß schlauchseitig von den Halterippen und/oder den Dichtungsnuten an der Klemmhülse innen eine Ringnut und am Nippel außen gegenüber der Ringnut ein Ringwulst vorgesehen sind und daß die Klemmhülse zumindest vor dem Verpressen außen einen Ringwulst aufweist, der im Bereich der schlauchseitigen Hälfte der Klemmhülse angeordnet ist.

Vorteilhafte Ausgestaltungen und Weiterbildungen der erfindungsgemäßen Schlauchanschlußarmatur ergeben sich aus den Unteransprüchen.

Durch den Ringwulst außen auf dem Nippel, durch den zumindest vor dem Verpressen vorhandenen Ringwulst außen auf der Klemmhülse und durch die Ringnut innen an der Klemmhülse gegenüber dem außen auf dem Nippel befindlichen Ringwulst zusätzlich zu den Halterippen innen an der Klemmhülse sowie einer ggf. welligen Kontur des Nippels wird eine Haltezone geschaffen, in der der Schlauch beim Preß- und Verankerungsvorgang so gefaßt wird, daß es nicht mehr zu einem Herausdrücken bzw. Herausfließen von Schlauchmaterial aus der Schlauchanschlußarmatur kommt. Als Ergebnis läßt sich dadurch auch eine höhere Kompression als bisher anwenden, was hinsichtlich der Lebensdauer und der Dichtheit bei hohen Impulsbelastungen gegenüber den bekannten Schlauchanschlußarmaturen vorteilhaft ist. Schließlich ist es auch nicht mehr notwendig, den Schlauch im Armaturenbereich vor der Montage zu präparieren, d.h. durch Schälen oder Schleifen eine konstante und gleichmäßige Oberfläche bzw. Kontur des Schlauchs herzustellen. Es ist daher möglich, den Hochdruckschlauch mit vollständigem Obergummi bzw. Außenmantelmaterial zu montieren.

Die Erfindung wird nachstehend anhand von Ausführungsbeispielen, die in der Zeichnung dargestellt sind, näher beschrieben. Dabei zeigen:
Fig. 1: einen Längsschnitt durch eine Schlauchanschlußarmatur vor dem Verpressen und ohne Schlauch;
Fig. 2: einen Schnitt ähnlich wie in Fig. 1, jedoch mit Hochdruckschlauch und nach dem Verpressen;
Fig. 3: eine Einzelheit aus Fig. 2;
Fig. 4: einen Teilschnitt durch eine abgewandelte Ausführungsform sowie mit Preßwerkzeug vor dem Verpressen;
Fig. 5: einen Schnitt wie in Fig. 4, jedoch nach dem Verpressen und
Fig. 6: einen Schnitt wie in Fig. 5 von einem weiteren Ausführungsbeispiel.

Eine Schlauchanschlußarmatur 1 für einen Hochdruckschlauch 2 besteht aus einem in das Schlauchende 3 einsetzbaren Nippel 4 und einer zu seiner Befestigung auf das Schlauchende 3 aufpreßbaren Klemmhülse 5. Die Klemmhülse 5 weist innen auf einem Teil ihrer Länge radial einwärts gerichtete sowie im Abstand voneinander angeordnete Halterippen 6 auf und der Nippel 4 ist mit einigen, auf die Schlauchwand hin gerichteten Dichtungsnuten 7 versehen. Ferner kann der Nippel 4 auf einem Teil seiner Länge eine wellige Oberfläche 8 aufweisen, die zur Erzielung einer sicheren und festen Verankerung des Hochdruckschlauches 2 in der Schlauchanschlußarmatur 1 beiträgt, wobei die Wellen mit den Halterippen 6 der Klemmhülse 5 zusammenwirken.

Im hinteren, dem Hochdruckschlauch 2 zugewandten Bereich weist der Nippel 4 aussen einen Ringwulst 9 auf. Der Querschnitt dieses Ringwulstes 9 ist etwa trapezförmig. Die Klemmhülse 5 weist vor dem Verpressen ebenfalls aussen einen Ringwulst 10 auf. Innen ist die Klemmhülse 5 in Höhe des Ringwulstes 9 des Nippels 4 mit einer Ringnut 11 versehen, deren Kontur annähernd formschlüssig an die Kontur des Ringwulstes 9 angepaßt ist. Die Nut 11 bzw. ihr Querschnitt konvergiert radial von innen nach aussen und besitzt radial innen eine Breite B₁ von 40 % und aussen eine Breite B₂ von 30 % des Schlauchnennmaßes sowie eine Tiefe T zwischen 6 und 8 % des Schlauchnennmaßes (Fig. 3). Der Wulst 9 auf dem Nippeöl 4 bzw. sein Querschnitt konvergiert ebenfalls radial von innen nach aussen und besitzt radial innen zweckmäßigerweise eine Breite B₃ von 30 % und radial aussen eine Breite B₄ von 25 % sowie eine Höhe H von 6 bis 8 % des Schlauchnennmaßes. Es versteht sich, daß die Größenangaben jeweils bevorzugte und zweckmäßige Werte darstellen und daß auch andere Größen, die diesen Werten nahekommen, technisch vorteilhaft sind.

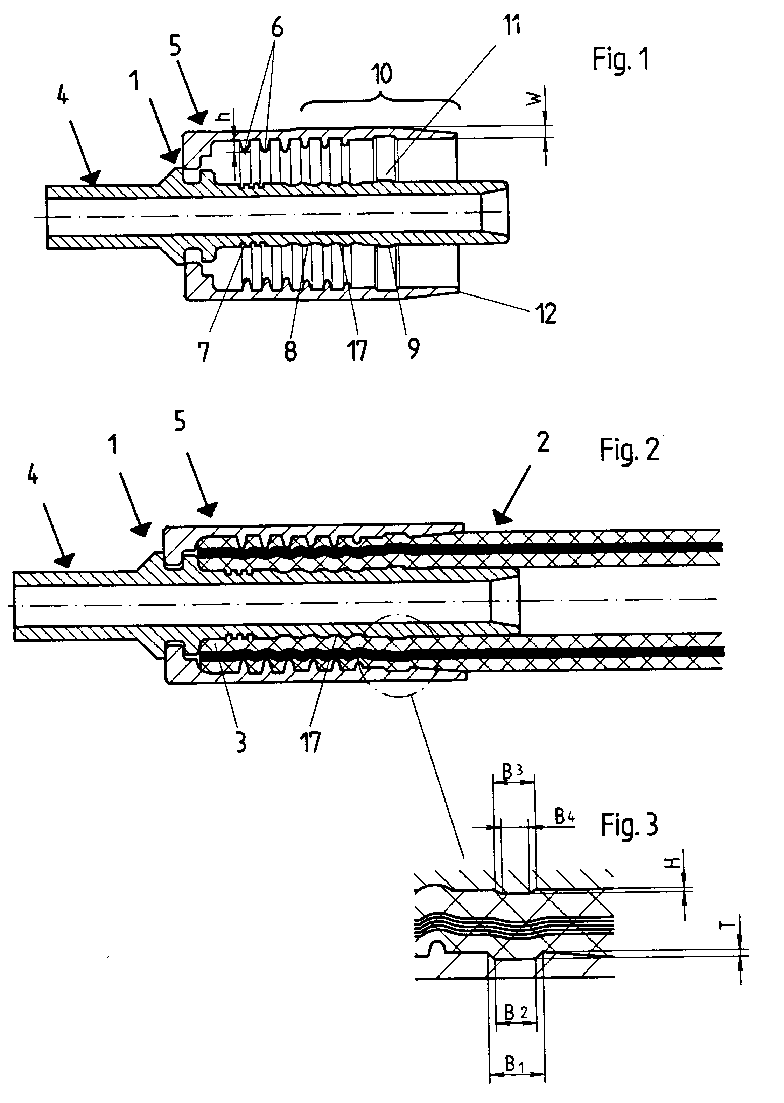

Wie ferner vor allem Figur 1 zeigt, sind der Ringwulst 9 auf dem Nippel 4 und die gegenüberliegende Ringnut 11 in der Klemmhülse 5 im Bereich des hinteren, schlauchseitigen Viertels des Nippels 4 angeordnet. Hierdurch wird sichergestellt, daß Schlauchmaterial beim Verpressen nicht aus der Klemmhülse 5 herausgequetscht wird.

Der Ringwulst 10 aussen auf der Klemmhülse 5 ist im Bereich von deren schlauchseitigen Hälfte angeordnet und kann wesentlich breiter sein als der Ringwulst 9 aussen auf dem Nippel 4. Gemäß dem in Figur 1 dargestellten Ausführungsbeispiel erstreckt sich der Ringwulst 10 über die halbe Länge der Klemmhülse 5 und endet erst an deren schlauchseitigen, ringförmigen Stirnfläche 12.

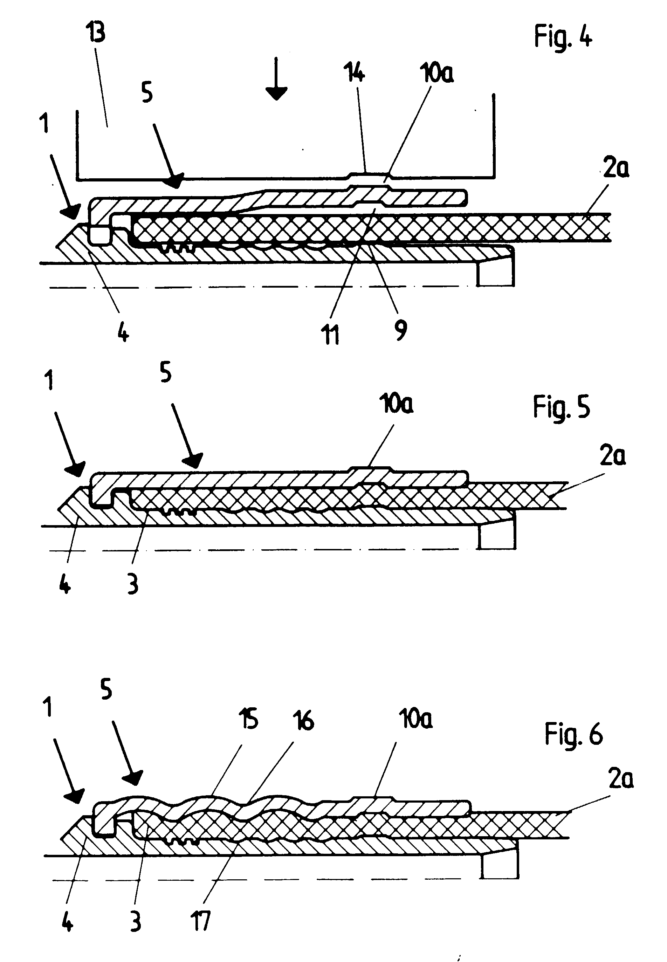

Nach dem Verpressen ist das Material des Ringwulstes 10 radial einwärts verlagert (Fig. 2), so daß die Klemmhülse aussen eine gleichmäßig zylindrische Kontur besitzt.

Gemäß dem in Figur 4 dargestellten Ausführungsbeispiel ist der Ringwulst 10a aussen auf der Klemmhülse 5 lagemäßig sowie symmetrisch der Ringnut 11 innen in der Klemmhülse 5 zugeordnet und nur wenig breiter als die Ringnut 11. Ferner weist der zum Verpressen der Schlauchanschlußarmatur 1 dienende Preßstempel 13 eine an den Ringwulst 10a der Klemmhülse 5 angepaßte Nut bzw. Ausnehmung 14 auf, so daß der Ringwulst 10a nach dem Verpressen erhalten bleibt (Fig. 5). Beim Verpressen wird der Schlauch 2a zwischen dem Ringwulst 9 des Nippels 4 und der Ringnut 11 der Klemmhülse 5 formschlüssig fixiert (Fig. 5) und dadurch ebenfalls verhindert, daß Schlauchmaterial beim vollständigen Verpressen der Klemmhülse 5 axial nach rechts in den Figuren 4 und 5 aus der Klemmhülse 5 heraustritt.

Die Klemmhülse 5 gemäß den Figuren 4 und 5 weist keine Halterippen wie das zuerst beschriebene Ausführungsbeispiel gemäß den Figuren 1 - 3 auf. Um dennoch einen gleichartigen Halteeffekt wie mit Hilfe der Halterippen 6 zu erzielen, wird die Klemmhülse 5 gemäß Fig. 6 im Bereich ihrer dem Schlauchende 3 zugewandten Hälfte wellenförmig auf den Schlauch 2a gepreßt. Die verschiedenen Wellen mit ihren Wellenbergen 15 und ihren Wellentälern 16 besitzen eine vergleichbare Haltewirkung wie die Halterippen 6 des zuerst beschriebenen Ausführungsbeispieles, da sie zusammen mit den wellenförmigen Erhebungen und Vertiefungen 17 aussen auf dem Nippel 4 eine innige Verzahnung mit dem Schlauch 2a bilden.

Die den Dichtungsnuten 7 auf dem Nippel 4 bzw. den wellenförmigen Vertiefungen 17 gegenüberliegenden Halterippen 6 innen an der Klemmhülse 5 nehmen in ihrer Höhe h zum freien Schlauchende 3 hin zweckmäßigerweise zu.

Schließlich ist es vorteilhaft, wenn die Wandstärke W der Klemmhülse 5 im Bereich ihrer dem Schlauchende 3 abgewandten Hälfte etwas größer ist als im Bereich des Schlauchendes 3 und wenn auch der Nippel 4 im Bereich des Ringwulstes 9 einen größeren Durchmesser bzw. Materialquerschnitt aufweist als im Bereich des Schlauchendes 3. Diese Maßnahmen tragen sowohl einzeln als auch in Kombination dazu bei, daß Schlauchmaterial beim Verpressen des Hochdruckschlauches 2 bzw. des Schlauches 2a nicht axial aus der Klemmhülse 5 heraustritt.

## Patentansprüche

1. Schlauchanschlußarmatur für einen Hochdruckschlauch (2) mit einem in das Schlauchende (3) einsetzbaren Nippel (4) und mit einer zu seiner Befestigung auf das Schlauchende (3) aufpreßbaren Klemmhülse (5), wobei radial einwärts gerichtete Halterippen (6) innen an der Klemmhülse (5) und/oder Dichtungsnuten (7) außen am Nippel (4) vorgesehen sind, **dadurch gekennzeichnet,** daß schlauchseitig von den Halterippen (6) und/oder den Dichtungsnuten (7) an der Klemmhülse (5) innen eine Ringnut (11) und am Nippel (4) außen gegenüber der Ringnut (11) ein Ringwulst (9) vorgesehen sind und daß die Klemmhülse (5) zumindest vor dem Verpressen außen einen Ringwulst (10, 10a) aufweist, der im Bereich der schlauchseitigen Hälfte der Klemmhülse (5) angeordnet ist.

2. Schlauchanschlußarmatur nach Anspruch 1, **dadurch gekennzeichnet,** daß der Ringwulst (9) des Nippels (4) und die gegenüberliegende Ringnut (11) der Klemmhülse (5) im Bereich des schlauchseitigen Viertels des Nippels (4) angeordnet sind.

3. Schlauchanschlußarmatur nach Anspruch 1 oder 2, **dadurch gekennzeichnet,** daß an der Klemmhülse (5) ein Ringwulst (10) vorgesehen ist, der sich in axialer Richtung auch im Bereich der Halterippen (6) erstreckt.

4. Schlauchanschlußarmatur nach einem der Ansprüche 1 bis 3, **dadurch gekennzeichnet,** daß die Ringnut (11) der Klemmhülse (5) im Querschnitt von einer Breite (B₁) von 40 % auf eine Breite (B₂) von 30 % des Schlauchnennmaßes zum Ringnutboden hin konvergiert, wobei die Tiefe (T) der Ringnut (11) zwischen 6 und 8 % des Schlauchnennmaßes beträgt.

5. Schlauchanschlußarmatur nach einem der Ansprüche 1 bis 4, **dadurch gekennzeichnet,** daß der Ringwulst (9) des Nippels (4) im Querschnitt radial von innen nach außen konvergiert und von einer Breite (B₃) von 30 % auf eine Breite (B₄) von 25 % des Schlauchnennmaßes konvergiert, wobei die Höhe (H) des Ringwulstes (9) 6 bis 8 % des Schlauchnennmaßes beträgt.

6. Schlauchanschlußarmatur nach einem der Ansprüche 1 bis 5 mit Halterippen (6) innen an der Klemmhülse (5), **dadurch gekennzeichnet,** daß die Halterippen (6) zum Schlauchende (3) hin in ihrer radialen Höhe (h) zunehmen und daß den Halterippen (6) Dichtungsnuten (7) und/oder wellenförmige Vertiefungen (17) am Nippel (4) gegenüberliegen.

7. Schlauchanschlußarmatur nach einem der Ansprüche 1 bis 6, **dadurch gekennzeichnet,** daß die Wandstärke (W) der Klemmhülse (5) im Bereich ihrer dem Schlauchende (3) abgewandten Hälfte größer ist als im Bereich des Schlauchendes (3) und daß der Nippel (4) im Bereich seines Ringwulstes (9) einen größeren Durchmesser oder Materialquerschnitt als im Bereich des Schlauchendes (3) aufweist.

## Claims

1. A hose connection fitting for a high-pressure hose (2) with a nipple (4) which can be fitted into the hose end (3) and a clamping sleeve (5) which can be pressed on to the hose end (3) for fixing the nipple, wherein radially inwardly directed holding ribs (6) are provided at the inside on the clamping sleeve (5) and/or sealing grooves (7) are provided at the outside on the nipple (4), characterised in that provided at the hose side from the holding ribs (6) and/or the sealing grooves (7) on the clamping sleeve (5) at the inside is an annular groove (11) and on the nipple (4) at the outside opposite the annular groove (11) an annular bead (9), and that at least prior to the pressing operation the clamping sleeve (5) has on the outside an annular bead (10, 10a) which is arranged in the region of the hose-side half of the clamping sleeve (5).

2. A hose connection fitting according to claim 1 characterised in that the annular bead (9) on the nipple (4) and the oppositely disposed annular groove (11) of the clamping sleeve (5) are arranged in the region of the hose-side quarter of the nipple (4).

3. A hose connection fitting according to claim 1 or claim 2 characterised in that provided on the clamping sleeve (5) is an annular bead (10) which also extends in the axial direction in the region of the holding ribs (6).

4. A hose connection fitting according to one of claims 1 to 3 characterised in that the annular groove (11) of the clamping sleeve (5) converges in cross-section from a width (B₁) of 40% to a width (B₂) of 30% of the nominal hose size towards the bottom of the annular groove, the depth (T) of the annular groove (11) being between 6 and 8% of the nominal hose size.

5. A hose connection fitting according to one of claims 1 to 4 characterised in that the annular bead (9) of the nipple (4) converges in cross-section radially outwardly and converges from a width (B₃) of 30% to a width (B₄) of 25% of the nominal hose size, the height (H) of the annular bead (9) being 6 to 8% of the nominal hose size.

6. A hose connection fitting according to one of claims 1 to 5 with holding ribs (6) at the inside on the clamping sleeve (5), characterised in that the holding ribs (6) increase in their radial height (h) towards the hose end (3) and that sealing grooves (7) and/or waveshaped depressions (17) on the nipple (4) are disposed opposite the holding ribs (6).

7. A hose connection fitting according to one of claims 1 to 6 characterised in that the wall thickness (W) of the clamping sleeve (5) is greater in the region of its half remote from the hose end (3) than in the region of the hose end (3) and that in the region of its annular bead (9) the nipple (4) is of a larger diameter or material cross-section than in the region of the hose end (3).

## Revendications

1. Dispositif de raccordement d'un tuyau flexible pour un tuyau à haute pression (2), avec un manchon (4), pouvant être inséré dans l'extrémité de tuyau (3), et une douille de serrage (4), pouvant être enfilée et pressée pour assurer sa fixation sur l'extrémité de tuyau (3), des nervures de maintien (6) orientées radialement vers l'intérieur étant prévues intérieurement sur la douille de serrage (5) et/ou des gorges d'étanchéité (7) étant prévues extérieurement sur le manchon (4), **caractérisé en ce que,** parmi les nervures de maintien (6), et/ou les gorges d'étanchéité (7), sont prévus sur la douille de serrage (5), intérieurement, côté tuyau souple, une gorge annulaire (11) et, sur le manchon (4), extérieurement et en face de la gorge annulaire (11), un bourrelet annulaire (9), et en ce que la douille de serrage (5) présente extérieurement, au moins avant le pressage, un bourrelet annulaire (10, 10a), qui est disposé dans la zone de la moitié, située côté tuyau flexible, de la douille de serrage (5).

2. Dispositif de raccordement de tuyau flexible selon la revendication 1, **caractérisé en que** le bourrelet annulaire (9) du manchon (4) et la gorge annulaire (11), placée en regard, de la douille de serrage (5) sont disposés dans la zone du quart, situé côté tuyau souple, du manchon (4).

3. Dispositif de raccordement de tuyau souple selon la revendication 1 ou 2, **caractérisé en ce qu'**un bourrelet annulaire (10), qui s'étend dans la direction axiale, également dans la zone des nervures de maintien (6), est prévu sur la douille de serrage (5).

4. Dispositif de raccordement de tuyau souple selon l'une des revendications 1 à 3, **caractérisé en ce que** la gorge annulaire (11) de la douille de serrage (5) a une section transversale qui va en convergeant depuis une largeur (B₁) de 40 % à une largeur (B₂) de 30 % de la dimension nominale du tuyau souple, la profondeur (T) de la gorge annulaire (11) étant comprise dans la plage située entre 6 et 8 % de la dimension nominale du tuyau souple.

5. Dispositif de raccordement de tuyau souple selon l'une des revendications 1 à 4, **caractérisé en ce que** le bourrelet annulaire (9) du manchon (4) a une section transversale qui va en convergeant radialement, depuis une largeur (B₃) de 30 % à une largeur (B₄) de 25 % de la dimension nominale du tuyau souple, la hauteur (T) du bourrelet annulaire (9) étant comprise dans la plage située entre 6 et 8 % de la dimension nominale du tuyau souple.

6. Dispositif de raccordement de tuyau souple selon l'une des revendications 1à 5, avec des nervures de maintien (6) prévues intérieurement sur la douille de serrage (5), **caractérisé en ce que** les nervures de maintien (6) ont une hauteur radiale (h) allant en augmentant en direction de l'extrémité (3) du tuyau souple, et en ce que des gorges d'étanchéité (7) et/ou des creusements (17) à forme ondulée sont prévu(e)s, sur le manchon (4) en regard des nervures de maintien (6).

7. Dispositif de raccordement de tuyau souple selon l'une des revendications 1 à 6, **caractérisé en ce que** l'épaisseur de paroi (W) de la douille de serrage (5), dans la zone de sa moitié opposée à l'extrémité (3) du tuyau souple, est supérieure à celle que l'on a dans la zone de l'extrémité de tuyau souple (3), et en ce que le manchon (4) a, dans la zone de son bourrelet annulaire (9), un diamètre ou une section transversale de matière plus grand que dans la zone de l'extrémité de tuyau souple (3).
